# EUROPEAN PATENT SPECIFICATION

(11) **EP 2 693 794 B1**
(45) Date of publication and mention of the grant of the patent: **19.12.2018**
(21) Application number: 12360051.2
(22) Date of filing: 02.08.2012
(51) Int. Cl.: H04W 16/30, H04W 24/02, H04W 88/08, H04W 16/10, H04W 16/08, H04W 16/28

(54) **Load distribution dependent dynamic adaptation of vertical sectors in a cell**
Lastverteilungsabhängige dynamische Anpassung von vertikalen Sektoren in einer Funkzelle
Adaptation dynamique de secteurs verticales depéndant de la distribution de la charge dans une cellule de radio

(43) Date of publication of application: 05.02.2014
(73) Proprietor: Alcatel Lucent, 91620 Nozay (FR)
(72) Inventor: Kuzminskiy, Alexandr, Wiltshire, SN5 5BG (GB); Rao, Anil, Wheaton, Illinois 60189 (US); Yang, Jun, Wiltshire, SN5 5BG (GB)
(74) Representative: Browne, Robin Forsythe

(56) References cited:
- EP-A1- 1 937 011
- EP-A2- 0 531 090
- EP-A2- 1 471 754
- WO-A2-00/04660
- WO-A2-95/22210
- DE-A1- 19 610 334
- DE-A1-102006 023 641
- US-A1- 2011 069 633
- WOO T-K ET AL: "SPACE PARTITIONING HYBRID CHANNEL ASSIGNMENT SCHEME FOR CELLULAR NETWORKS", WIRELESS PERSONAL COMMUNICATIONS, SPRINGER, DORDRECHT, NL, vol. 18, no. 1, 1 July 2001 (2001-07-01), pages 79-92, XP001099998, ISSN: 0929-6212, DOI: 10.1023/A:1011247723632

## Description

### FIELD OF THE INVENTION

The present invention relates to a method of dynamically adapting vertical sectorisation of radio coverage provided within a radio cell supported by a base station in a wireless telecommunications network, a computer program product and network management node operable to perform that method.

### BACKGROUND

Wireless telecommunications systems are known. In such known systems, radio coverage is provided to user equipment, for example, mobile telephones, by geographical area. A base station is located in each geographical area to provide the required radio coverage. User equipment in an area served by a base station receives information and data wirelessly from the base station and transmits information and data wirelessly to the base station.

Antenna arrays are known. For example, in many wireless telecommunications systems, a number of base station are arranged to communicate with a number of user equipment, that communication occurring using antenna arrays located at a base station typically on a mast head. Each base station is geographically separated from others in a wireless network in order to provide radio frequency communications coverage over a wide area.

Each base station is typically arranged to support a number of sectors provided such that they extend radially outwards from a base station location. Each antenna array is installed, orientated and configured within a network to provide required geographical coverage to user equipment. Although radio cells are provided to support wireless communications between user equipment and a network and, in particular, a base station, such radio cell provision has a number of drawbacks.

DE102006023641 discloses a mobile radio network with multiple base stations that have different transmission resources for near and far field, with neighbouring cells having consistent far field frequency bands.

WO 95/22210 discloses the idea of varying the number of traffic channels allocated to a particular user sector in a communication system. In one example modification of the sector size is achieved through alteration of the beam pattern projected by the antenna system. These sectors are horizontal sectors.

EP0531090 discloses a cellular communication system that re-uses communication frequencies in cells remote from each other. The idea of providing a tilt angle to the antenna in a cell to concentrate radiation power near to, or far from, an antenna is used.

Accordingly, it is desired to provide improved radio cell coverage.

### SUMMARY

According to a first aspect, there is provided a method of dynamically adapting vertical sectorisation of radio coverage provided within a radio cell supported by a base station in a wireless telecommunications network, the method comprising: determining whether the base station is capable of supporting two or more vertical sectors of radio coverage within the radio cell; monitoring an operation characteristic indicative of load in the radio cell supported by the base station to determine whether a predetermined threshold has been passed; and if the base station is capable of supporting two or more vertical sectors of radio coverage within the radio cell and the predetermined threshold has been passed, adapting the vertical sectorisation of the radio coverage provided within the radio cell.

The first aspect recognises that an increased number of user equipment within a network, together with an increase in use of data-hungry smartphone applications, has led to an increased demand for capacity within a wireless telecommunications network. It has been recognised that one possibility which may provide an increase in capacity within a network is that of vertical sectorisation. Vertically sectorised radio cells are cells in which multiple sectors are provided by means of separated vertical antenna transmission or reception patterns. Such arrangements achieve a cell split without the need to provide additional base station sites. It will be appreciated that vertical sectorisation may be achieved by providing appropriate fixed antenna arrays on a mast head at a base station, or may be implemented by use of appropriate adaptive antenna array technologies. Use of such adaptive antenna arrays may allow the provision of fully controlled multiple vertical antenna patterns. It will be appreciated, for example, that it is possible to form two or more vertical sectors by choosing appropriate fixed or adaptive antenna arrays.

The first aspect further recognises that vertical sectorisation may not always be beneficial within a network, can be resource-expensive and typically has a large impact on network side operation since the number of cells within a network is typically increased significantly by implementing vertical sectorisation and a network management node provided within a network is typically set up to deal with a number of base stations rather than a number of cells supported by that base station. Furthermore, computation and loading within the network side increases as the cell layout becomes more sophisticated since provision of more cells or vertically sectored cells within a radio cell will typically result in more handovers, less resource and processing power of a network control node for each cell, higher control loading on a network management node (for example, a radio network controller in a UMTS network or a mobility management entity within an LTE network) and increased overall network optimization.

The first aspect recognises that an intelligent control mechanism may be implemented to ensure that vertical sectorisation is implemented in such a way that benefits to the network can be achieved and undesirable side effects of vertical sectorisation are proportionately reduced.

The first aspect has particular applicability to self-optimising networks (SON), in which changes in network operation are dynamically accounted for by distributing decisions and logic regarding operational parameters of the network to nodes within the network.

According to one embodiment, adapting comprises increasing vertical sectors of the radio coverage provided in the radio cell. According to one embodiment, adapting comprises decreasing vertical sectors of the radio coverage provided in the radio cell. Accordingly, if vertical sectorisation is available in a radio cell, the number of vertical sectors may be increased or decreased depending upon the load being experienced in that cell.

According to one embodiment, adapting comprises adapting a pattern of vertical sectors of radio coverage provided in the radio cell. Accordingly, if the arrangement of vertical sectors within a radio cell is not fixed and is adaptable, for example, if the coverage of the vertical sectors can be adapted in response to a particular distribution of load being reported within a cell, the pattern of radio coverage provided by vertical sectorisation can be dynamically changed to best meet detected cell loading characteristics.

According to one embodiment, monitoring comprises monitoring an operational characteristic indicative of uplink load in the radio cell. According to one embodiment, monitoring comprises monitoring an operational characteristic indicative of downlink load in the radio cell. Accordingly, vertical sectorisation may be responsive to thresholds set in one or other or both of data traffic load being experienced in a radio cell of a wireless communication network. The thresholds may be based on a particular relationship between indications of uplink and downlink traffic load. It will be understood that if high uplink load is detected, vertical sectorisation of a reception antenna may be implemented and be beneficial to overall operation of a network.

According to one embodiment, the monitored operational characteristic comprises an indication of scheduler saturation in the radio cell. Accordingly, if a scheduler operating in support of a radio cell is determined to be close to saturation, it is likely that loading in that cell is significant and that implementation of vertical sectorisation, where available, will be beneficial to overall network operation.

According to one embodiment, monitoring of the operational characteristic indicative of load comprises monitoring for an indication of cell overload. If a cell is determined to be close to overload, that is to say, available resource and scheduling is stretched or close to capacity, it is likely to be beneficial to implement vertical sectorisation with a radio cell.

According to one embodiment, monitoring further comprises monitoring characteristics of user equipment communicating with the base station within the radio cell. Accordingly, implementation of vertical sectorisation may be further optimised by determining characteristics of the load, or user equipment located in that cell, for example, the geographical distribution of the load or user equipment. Accordingly, vertical sectorisation may be implemented to best match the determined characteristics of user equipment or data traffic within the radio cell. According to one embodiment, the user equipment characteristics comprise an indication of location of the user equipment within the radio cell.

According to one embodiment, the method further comprises informing user equipment operating within the radio cell of the adaptation to the vertical sectorisation of the radio coverage provided in the radio cell. According to one embodiment, the method further comprises instructing the user equipment in the radio cell to communicate with the base station within a specified vertical sector provided in the radio cell. Accordingly, unnecessary signalling within the network, associated with, for example, handovers between vertical sectors, can be minimised. Furthermore, the likelihood of call drops is minimised by informing user equipment of upcoming changes in cell structure.

According to one embodiment, the method further comprises providing configuration information to an adaptive antenna array to support the adaptation to the vertical sectorisation of the radio coverage provided in the radio cell. Active antenna arrays provide a suitable means to implement vertical sectorisation in a network and dynamically change sectorisation patterns.

A second aspect provides a computer program product operable, when executed on a computer, to perform the method of the first aspect.

A third aspect provides a network control node operable to dynamically adapt vertical sectorisation of radio coverage provided within a radio cell supported by a base station in a wireless telecommunications network; the network control node comprising: determination logic operable to determine whether the base station is capable of supporting two or more vertical sectors of radio coverage within the radio cell; monitoring logic operable to monitor an operational characteristic indicative of load in the radio cell supported by the base station to determine whether a predetermined threshold has been passed; and adaptation logic operable to adapt the vertical sectorisation of the radio coverage provided in the radio cell if the base station is capable of supporting two or more vertical sectors of radio coverage within the radio cell and the predetermined threshold has been passed.

According to one embodiment, the adaptation logic is operable to increase vertical sectors of radio coverage provided in the radio cell.

According to one embodiment, the adaptation logic is operable to decrease vertical sectors of radio coverage provided in the radio cell.

According to one embodiment, the adaptation logic is operable to adapt a pattern of vertical sectors of radio coverage provided in the radio cell.

According to one embodiment, the monitoring logic is operable to monitor an operational characteristic indicative of uplink load in the radio cell.

According to one embodiment, the monitoring logic is operable to monitor an operational characteristic indicative of downlink load in the radio cell.

According to one embodiment, the monitoring logic is operable to monitor an indication of scheduler saturation in the radio cell.

According to one embodiment, the monitoring logic is operable to monitor for an indication of cell overload.

According to one embodiment, the monitoring logic is operable to monitor characteristics of user equipment communicating with the base station within the radio cell.

According to one embodiment, the user equipment characteristics comprise an indicaton of location of the user equipment within the radio cell.

According to one embodiment, the control node further comprises communication logic operable to inform user equipment operating within the radio cell of the adaptation to the vertical sectorisation of said radio coverage provided in the radio cell.

According to one embodiment, the communication logic is operable to instruct the user equipment in the radio cell to communicate with the base station within a specified vertical sector provided in the radio cell.

According to one embodiment, the control node further comprises antenna operation logic operable to provide information to an adaptive antenna array to support the adaptation to the vertical sectorisation of the radio coverage provided in the radio cell.

Further particular and preferred aspects are set out in the accompanying independent and dependent claims. Features of the dependent claims may be combined with the features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further with reference to the drawings, in which:
Figure 1 illustrates the main components of a telecommunications network according to one embodiment;
Figure 2 illustrates schematically the main components of a vertical sectorisation implementation according to one embodiment; and
Figures 3 to 6 illustrate schematically vertical sectorisation simulation results according to a first set of simulation conditions.

### DESCRIPTION OF THE EMBODIMENTS

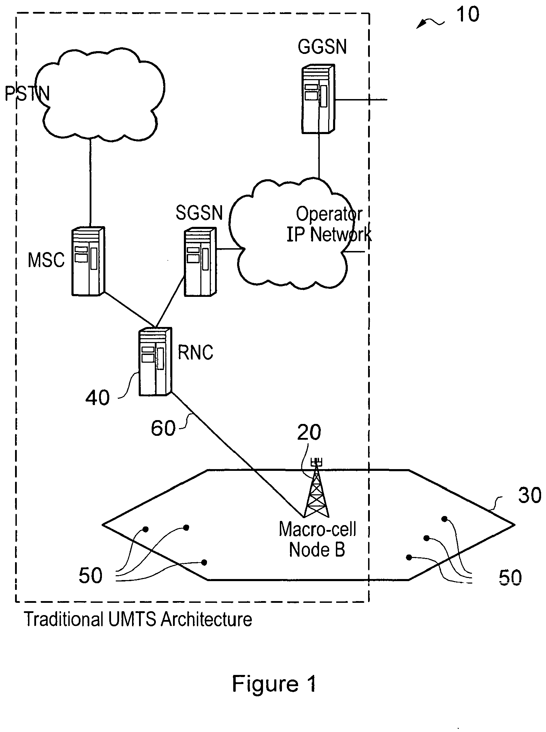

Figure 1 illustrates generally a wireless telecommunications system 10. User equipment 50 roam through the wireless telecommunications system. Base stations are provided which support areas of radio coverage 30. A number of such base stations are provided and are distributed geographically in order to provide a wide area of coverage to user equipment 50. When user equipment are within an area served by a base station 30, communications may be established between the user equipment and the base station over associated wireless radio links. Each base station typically supports a number of radio coverage sectors within the geographical area of service 30. Typically, a different antenna provided at a base station supports each associated sector.

Accordingly, each base station 20 has multiple antennas and signals sent through the different antennas are electronically weighted to provide a sectorised approach. Each sector of radio coverage is typically referred to as a radio cell. Of course, it will be appreciated that Figure 1 illustrates a small sub-set of a total number of user equipment and base stations that may be present in a typical communications network 10.

The wireless communications system shown in Figure 1 is a typical 3G UMTS system and each base station (node B) is managed by a Radio Network Controller (RNC) 40. The RNC 40 controls opereration of the wireless communications system by communicating with a plurality of base stations over a backhaul communications link 60. The RNC also typically communicates with user equipment 50 via signalling which passes through each base station. It will thus be understood that an RNC effectively manages the entire wireless communications system.

It will be appreciated that in an LTE system (also known as a 4G system), the functionality of the RNC is replaced by the functionality of a Mobility Management Entity (MME) and that some of the functionality provided by the RNC within the 3G UMTS system may itself be available to base stations (e node Bs) provided within the LTE system.

It is recognised that a possibility for increasing capacity within a wireless network is vertical sectorisation of radio coverage provided within radio cells. According to such a scheme, multiple sectors of radio coverage are provided within a radio cell by means of separated vertical antenna patterns. Such arrangements achieve cell split without the need to provide additional base station sites. Some implementations of vertically sectorised radio cells utilise fixed antenna arrays, others utilise technology such as adaptive antenna arrays which can be more dynamically utilised to provide a range of possible vertical sectorisation patterns.

Aspects described recognise that vertical sectorisation is not always beneficial within a network. In particular, implementation of vertical sectorisation can be resource-expensive and particularly have a large impact on the network side of infrastructure since the number of cells is increased significantly and cell layout becomes more sophisticated, thereby leading to increased handovers and less resource and processing power of the RNC being provided or available to each cell.

Furthermore, it will be appreciated that optimizing the network becomes more difficult and leads to an increase in computational complexity.

Aspects add intelligent control to the implementation of vertical sectorisation. In some embodiments, intellingent control is implemented both in relation to the particular nature of vertical sectorisation implemented and network control node resource allocation, either at an RNC or MME. Aspects allow the achievement of improved performance and may allow for more efficient and flexible usage of resource and processing power within a network.

It will be appreciated that a network control node, for example, an RNC or MME, may be operable to control more than a hundred sites (that is to say, 300 cells after typical cloverleaf sectorisation of radio coverage). At each time, only a sub-set of cells within a geographical region served by base stations connected to that network control node may be experiencing high traffic loading. The hot spot or highly loaded area is also likely to change over time. It will be appreciated that in such a typical real world scenario a fixed vertical sectorisation scheme may led to less resource and processing power being available in each cell across the network, and system level simulation results indicate that a fixed vertical sectorisation scheme across such a network show virtually no throughput gain observed when traffic loading across the network is light.

That is to say, the extra complexity and signalling load imposed by vertical sectorisation is unwarranted when traffic within the network is light. On the other hand, vertical sectorisation has been seen to bring significant gain in throughput when traffic loading is heavy. Thus, aspects recognise that dynamically adjusting usage of vertical sectorisation based on long term measurements of traffic loading may be beneficial.

According to some embodiments described in more detail below, reconfiguration of vertical sectorisation in a dynamic manner can be supported by a proactive handover approach. Such a proactive handover approach may be integrated into network reconfiguration procedures and used to reduce possible call drops.

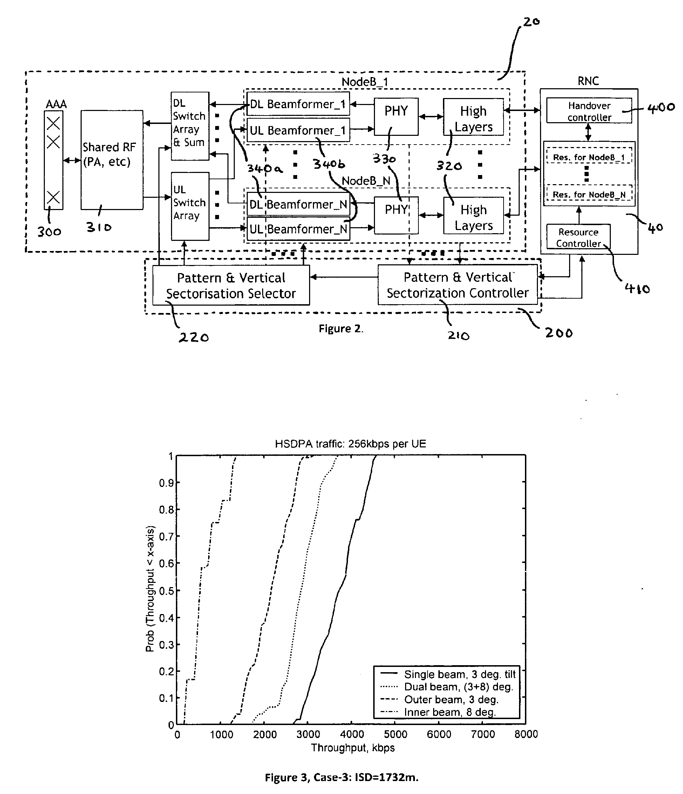

Figure 2 illustrates schematically a proposed structure according to one embodiment in a UMTS network. It will be appreciated that a similar diagram could be drawn for LTE (4G) systems and those functions carried out by an RNC in a UMTS network would typically be carried out by an MME within an LTE network. Figure 2 illustrates schematically a base station 20 connected to an RNC 40. Provided within the network there is also a vertical sectorisation logic 200. Although that vertical sectorisation logic 200 is shown external to RNC 40, it will be appreciated that it can be located at any sensible network node within the wireless telecommunications network generally.

The base station 20 of the embodiment shown in Figure 2 comprises an active antenna array 300 connected to a shared radio frequency portion including a power amplifier and similar 310. That hardware is connected to base station controlling logic. In the embodiment shown in Figure 2, the base station 20 is operable to support N different cells. Each cell (node B_1, node B_2... node B_N) is supported by the hardware referred to previously, namely the active antenna array 300 and the shared RF equipment 310. The base station 20 comprises high layers of logic 320, a physical layer 330 and uplink and downlink beam forming logic 340a, 340b in respect of each cell supported by the base station. The high layers of logic 320 are in communication with RNC 40 and receive instructions from the RNC 40.

It will be appreciated that RNC 40 and base stations 20 each have information regarding loading being experienced in a particular region of a network. The vertical sectorisation logic 200 comprises a pattern and vertical sectorisation controller 210 and a pattern and vertical sectorisation selector 220. The sectorisation logic 200 is operable to collect information from associated base stations and from the RNC itself and to analyse that information to implement decisions, for example, selected patterns, whether single, double or multiple vertical sectors are appropriate, and communicate implementation information from the controller 210 operable to make those decisions to the selector 220. The selector module 220 enforces decisions made by the controller 210 and configures associated equipments; for example, by setting downlink and uplink beam formers of each base station such that vertical sectors are enabled. Furthermore, the selector module 220 may be operable to set the downlink and uplink switch array for a particular base station 20 provided in a network.

Vertical sectorisation controller 200 is also operable to communicate with RNC 40 and, in particular, to provide information regarding the status of each base station 20; that is, whether it has activated or deactivated vertical sectorisations within a radio cell.

RNC 40 comprises a handover controller 400 and a resource controller 410. According to some embodiments, the handover controller 400 provided at RNC 40 may be operable to perform proactive handover to reduce call drops when switching between vertical sectorisation schemes.

A resource controller 410 provided at RNC 40 is operable to decide the allocation of, or release of, RNC resource in relation to a base station based on a selected vertical sectorisation scheme communicated to it by vertical sectorisation logic 200.

It will be appreciated that, according to such a scheme, an antenna pattern and vertical sectorisation, together with usage of a base station and available RNC resources can be adapted to traffic demand within a network dynamically.

One implementation of an embodiment in a WCDMA system is as follows: An initial network planning procedure may identify some sites likely to be suitable for the provision of vertical sectorisation; for example, based on likely cell load, cell layout, available antenna height and other similar physical factors, and equipment is installed within the network accordingly.

On sites identified as being particularly suitable for vertical sectorisation, adaptive antenna arrays may be provided. A downlink switch array and sum module may be implemented as a signal additional block with multiple inputs and each input can be enabled or disabled independently. Furthermore, an uplink switch array can be implemented as a serial to parallel block which is operable to copy a serial input signal to all active output ports. Typically, the downlink and uplink beam formers may be implemented in the base band of base station. The pattern and vertical sectorisation controller 210 may be operable to work according to a set of particular criteria or thresholds. According to one embodiment, those thresholds may be set in the downlink as follows: the controller 210 may be initialised when the network is operating without any vertical sectorisation; that is to say, a single vertical sector is provided in the downlink and each base station supports three cells in a typical cloverleaf formation. In such a case, the RNC allocates resource to that base station in a manner in which resource to each cell supported by a base station is maximised and there are no side effects associated with the complexity of vertical sectorisation. According to this embodiment, the controller 210 is operable to continuously analyse HSDPA (High Speed Downlink Packet Access Data) key performance indicators and, if it determines that the following conditions are met in the medium or long term, it may be operable to take steps to change the vertical sectorisation of a network. In this particular embodiment, if it is determined that there is HSDPA traffic and the HSDPA scheduler at a base station is close to saturation, steps are taken to implement multiple vertical sectors within radio cells. Indications that an HSDPA scheduler is close to saturation and downlink traffic is high may include, for example, a detection that 10% of HSDPA user equipment have a payload data unit discard rate of higher than, for example, 0.2%, and/or a scheduler may use all available OVSF codes and power for more than 90% of the time. It will be appreciated that other indicators may be used to determine that traffic load is high in a particular region of a network.

According to some embodiments, user equipment determined to be in a heavily loaded area and/or being served by a base station experiencing high loading may be analysed by the vertical sectorisation logic and parameters may be identified which identify the user equipment into two groups in terms of downlink signal quality. For example, it may be determined that user equipment in the far field may have a low signal quality and near field user equipment may be experiencing a high signal quality. For example, the average Channel Quality Indication (CQI) threshold for low signal quality may be, according to some embodiments, set to be 10 and the CQI threshold for high signal quality may be set to 20. In such an embodiment, the vertical sectorisation controller may consider enabling vertical sectorisation to essentially form two cells within one existing radio cell and, thus, form two vertical sectors in the downlink in that particular base station. One vertical sector or cell and its scheduler may be operable to serve near field user equipment and the other vertical sector may be implemented and configured such that it is operable to serve far field user equipment within what was previously a single radio cell.

It will be appreciated that the vertical sectorisation controller may be operable, in some embodiments, to determine an appropriate downlink antenna pattern for each vertical sector. Such an arrangement is particularly useful where an active antenna array is available and dynamic beam forming may be implemented such that if it is determined that a particular geographical region within an existing radio cell is experiencing a heavy load, a vertical sector can be formed such that a beam is provided for that particularly heavily loaded region.

According to embodiments, the pattern and vertical sectorisation selector 220 is operable to configure downlink beam formers provided at base station 20 and switch arrays to enforce the decision made by sectorisation controller 210.

If, in the course of monitoring load thresholds, it is determined by the sectorisation logic that the criteria for reduction of vertical sectors have been met (for example, the vertical sectorisation logic 200 determines that there is a significant traffic reduction in an area currently implementing more than one vertical sector), according to some embodiments, handover controller 400 provided at an RNC is operable to inform user equipment operating in sectors which are to be severed that the sector is to be switched off and a handover to another available vertical sector (which is to be kept alive) is necessary. It will be appreciated that those vertical sectors which are to remain will be subject to a widened beam pattern in order to maintain coverage across a geographical area which can assist in the handover process. The RNC may indicate to user equipment operating in a cell which is to be turned off in a number of ways, including, for example, a radio bearer reconfiguration message sent from the RNC via a base station to user equipment, or via an enhanced serving cell change procedure.

In either an increase or a decrease of a vertical sectors scenario, an RNC is typically operable, in conjunction with resource controller 410, to allocate resource and processing power to the vertical sectors enabled. If the number of vertical sectors is increased, handover controller may be operable to inform some user equipment to hand over to new vertical sectors. Alternatively, normal handover procedures whereby the user equipment reports a signal being received from a different cell more strongly can result in initiation of a handover procedure. The change of vertical sectorisation may occur, according to some embodiments, several times a day and thus by enforcing proactive handover, the signalling overhead associated with vertical sectorisation may be such that only a small impact is felt across the network.

Figures 3 to 6 illustrate simulations of vertical sectorisation schemes in various network deployments. In particular, Figures 3 to 6 illustrate a cumulative distribution function of cell throughput. The main simulation conditions are shown in the following table:

**Table 1. Simulation parameters**

| Network topology | Multi-cell with wraparound |
|---|---|
| Carrier Freq./ System Bandwidth | WCDMA - 2 GHz with 5 MHz bandwidth |
| Path Loss Model | L = 128.1 + 37.6log10(d_km) for 2 GHz WCDMA |
| Site-to-site distance (ISD) | Case-1: 500m, Case-3:1732m |
| Shadow fading | s=8 dB, site-to-site correlation = 0.5, correlation length is 50m |
| BS antenna | Height=32m, 17dBi gain, 6.5deg 3dB beam width. Pattern as per 3GPP 36.814 |
| BS Tx power | 1X40 Watts for single sector, 2x20w for vertical sectorisation |
| Cable loss | 3 dB |
| Penetration loss | 20 dB |
| BS noise figure | 4 dB |
| Max. Mobile power | 24 dBm |
| Antenna configuration | UE antenna height: 1.6m, 1x2 equalizer at HSDPA UEs, 1x1 RAKE at voice UEs. |
| Traffic Model | 15 HSDPA UEs (variable rate UDP) and 16 AMR12.2k UEs (active factor=0.5) per single cell, uniformly dropped. |
| Scheduling algorithm | Proportional fair |
| Fading Channel | PedA-3 km/h for HSDPA UEs (location fixed), VehA-3km/h for voice UEs (3km/h mobility). |
| Down tilt for vertical sectorisation | Case-1: single cell: 10 deg tilt, Vertical sectorisation: sector-1: 10 deg, sector-2: 18 deg. |
| | Case-3: single cell: 3 deg tilt, Vertical sectorisation: sector-1: 3 deg, sector-2: 8 deg. |

Figure 3 illustrates that vertical sectorisation can lead, in some scenarios, to a throughput loss. In this case, a large cell (the cell diameter being 1732 metres) lightly loaded (256 kbps per user equipment) is such that a dual beam offers less throughput than a single beam at a 3° tilt. In this case, the throughput loss is in the region of a 23% loss. This can be attributed to the power per sector being reduced in a vertical sectorisation implemented and that power loss results in a bottleneck. It will be appreciated that the total power which can be supported by the antenna in this scenario is 40w.

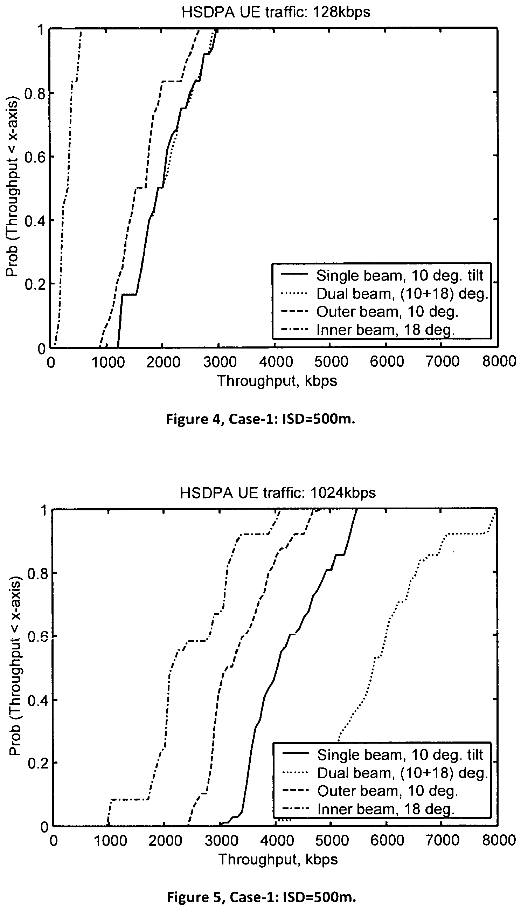

Figures 4 to 6 illustrate results of simulations using smaller cells. The diameter of the cell in each of those cases is in the region of 500 metres. Furthermore, the base station antenna is mounted at a height of 32 metres, considered a scenario suitable for vertical sectorisation. In the scenario illustrated in Figure 4, the single HSDPA scheduler provided is not saturated (in the example of Figure 4, each user equipment is lightly loaded at 128 kbps). In this scenario, the introduction of a second vertical sector does not lead to a higher cell throughput. It can be seen that the throughput is substantially identical to provision of a single beam.

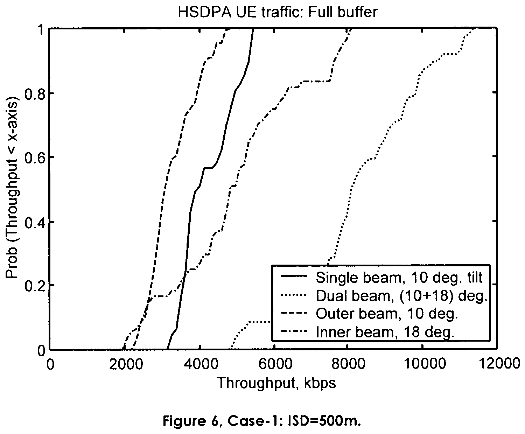

However, when the per user equipment traffic is increased to 1 mbps, as shown in Figure 5, the single scheduler becomes saturated and two vertical sectors and their associated schedulers provide a higher combined cell throughput. In this illustrated scenario, the cell throughput is approximately 39% higher. When each user equipment has full buffer traffic, as illustrated in Figure 6, the throughput gain from vertical sectorisation is maximised. In the example illustrated in Figure 6, the throughput gain appears to be in the region of 95%.

The simulation results illustrated in Figures 3 to 6 highlight the fact that resource-demanding vertical sectorisation has scenarios which are particularly advantageous. The proposed adaptive solution provided by aspects allows a dynamic trade-off between throughput gain and resource utilisation, particularly in an adaptive antenna array base network.

Aspects recognise that resource-demanding vertical sectorisation has particularly applicable scenarios. That is to say, it is not always beneficial to the network and the side effects cannot be neglected. Aspects and embodiments allow dynamic trade-off between throughput gains and resource utilisation and have particular applicability in an adaptive antenna array base network. To support the reconfiguration of vertical sectorisation, a proactive handover approach may be integrated into the procedure to reduce possible call drops during switch between vertical sectorisation schemes.

Aspects allow intelligent control to be added to vertical sectorisation and RNC (or MME) resource allocation, thereby achieving better performance and more efficient and flexible usage of resource when vertical sectorisation is supported. A proactive handover scheme may be integrated into sectorisation switching procedures, thereby reducing possible call drops during any changes of vertical sectorisation.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method of dynamically adapting vertical sectorisation of radio coverage provided within a radio cell supported by a base station in a wireless telecommunications network, said method comprising:
determining whether said base station is capable of supporting two or more vertical sectors of radio coverage within said radio cell;
monitoring an operational characteristic indicative of load in said radio cell supported by said base station to determine whether a predetermined threshold has been passed; and if said base station is capable of supporting two or more vertical sectors of radio coverage within said radio cell and said predetermined threshold has been passed,
adapting said vertical sectorisation of said radio coverage provided in said radio cell.

2. A method according to claim 1, wherein said adapting comprises increasing vertical sectors of radio coverage provided in said radio cell.

3. A method according to claim 1, wherein adapting comprises decreasing vertical sectors of said radio coverage provided in said radio cell.

4. A method according to any preceding claim, wherein adapting comprises adapting a pattern of vertical sectors of radio coverage provided in said radio cell.

5. A method according to any preceding claim, wherein said monitoring comprises monitoring an operational characteristic indicative of uplink load in said radio cell.

6. A method according to any preceding claim, wherein said monitoring comprises monitoring an operational characteristic indicative of downlink load in said radio cell.

7. A method according to any preceding claim, wherein said monitored operational characteristic comprises an indication of scheduler saturation in said radio cell.

8. A method according to any preceding claim, wherein said monitoring of said operational characteristic indicative of load comprises monitoring for an indication of cell overload.

9. A method according to any preceding claim, wherein said monitoring further comprises monitoring characteristics of user equipment communicating with said base station within said radio cell.

10. A method according to claim 9, wherein said user equipment characteristics comprise an indication of location of said user equipment within said radio cell.

11. A method according to any preceding claim, wherein said method further comprises informing user equipment operating within said radio cell of said adaptation to said vertical sectorisation of said radio coverage provided in said radio cell.

12. A method according to any preceding claim, further comprising instructing said user equipment in said radio cell to communicate with said base station within a specified vertical sector provided in said radio cell.

13. A method according to any preceding claim, wherein said method further comprises providing information to an adaptive antenna array to support said adaptation to said vertical sectorisation of said radio coverage provided in said radio cell.

14. A computer program product operable, when executed on a computer, to perform the method of any one of claims 1 to 13.

15. A network control node (20) operable to dynamically adapt vertical sectorisation of radio coverage provided within a radio cell supported by a base station in a wireless telecommunications network; said network control node comprising:
determination logic (210) operable to determine whether said base station is capable of supporting two or more vertical sectors of radio coverage within said radio cell;
monitoring logic (200) operable to monitor an operational characteristic indicative of load in said radio cell supported by said base station to determine whether a predetermined threshold has been passed; and
adaptation logic (220) operable to adapt said vertical sectorisation of said radio coverage provided in said radio cell if said base station is capable of supporting two or more vertical sectors of radio coverage within said radio cell and said predetermined threshold has been passed.

## Patentansprüche

1. Verfahren zur dynamischen Anpassung einer vertikalen Funkabdeckungs-Sektorisierung, die innerhalb einer Funkzelle bereitgestellt wird, die durch eine Basisstation in einem drahtlosen Telekommunikationsnetz unterstützen wird, wobei das Verfahren Folgendes aufweist:
- Bestimmen, ob die Basisstation in der Lage ist, zwei oder mehrere vertikale Funkabdeckungssektoren innerhalb der Funkzelle zu unterstützen;
- Überwachen einer Betriebskennlinie, die die Auslastung der Funkzelle anzeigt, die durch die Basisstation unterstützt wird, um zu bestimmen, ob ein vorbestimmter Schwellwert überschritten worden ist, und falls die Basisstation in der Lage ist, zwei oder mehrere vertikale Funkabdeckungssektoren innerhalb der Funkzelle zu unterstützen, und der vorbestimmte Schwellwert überschritten worden ist,
- Anpassen der vertikalen Funkabdeckungs-Sektorisierung, die von der Funkzelle bereitgestellt wird.

2. Verfahren gemäß Anspruch 1,
wobei das Anpassen ein Vergrößern der vertikalen Funkabdeckungssektoren umfasst, die in einer Funkzelle bereitgestellt werden.

3. Verfahren gemäß Anspruch 1,
wobei das Anpassen ein Verrringern der vertikalen Funkabdeckungssektoren umfasst, die in einer Funkzelle bereitgestellt werden.

4. Verfahren gemäß einem der vorhergehenden Ansprüche,
wobei das Anpass ein Anpassen eines Musters von vertikalen Funkabdeckungssektoren umfasst, die in einer Funkzelle bereitgestellt werden.

5. Verfahren gemäß einem der vorhergehenden Ansprüche,
wobei das Überwachen ein Überwachen einer Betriebskennlinie umfasst, die die Uplink-Auslastung in der Funkzelle anzeigt.

6. Verfahren gemäß einem der vorhergehenden Ansprüche,
wobei das Überwachen ein Überwachen einer Betriebskennlinie umfasst, die die Downlink-Auslastung in der Funkzelle anzeigt.

7. Verfahren gemäß einem der vorhergehenden Ansprüche,
wobei die überwachte Betriebskennlinie eine Angabe einer Scheduler-Ausnutzung in der Funkzelle umfasst.

8. Verfahren gemäß einem der vorhergehenden Ansprüche,
wobei das Überwachen der Betriebskennlinie, die die Auslastung anzeigt, ein Überwachen auf ein Anzeichen für eincauf Funkzellenüberlastung umfasst,

9. Verfahren gemäß einem der vorhergehenden Ansprüche,
wobei das Überwachen ferner ein Überwachen der Kennlinien eines Benutzergeräts umfasst, dass mit der Basisstation innerhalb der Funkzelle kommuniziert.

10. Verfahren gemäß einem der vorhergehenden Ansprüche,
wobei die Kennlinien der Benutzerendgeräte eine Angabe für den Ort des Benutzergeräts innerhalb der Funkzelle umfasst.

11. Verfahren gemäß einem der vorhergehenden Ansprüche,
wobei das Verfahren ferner ein Informieren des Benutzergeräts darüber umfasst, dass es innerhalb der Funkzelle betrieben wird, für die die Anpassung der vertikalen Funkabdeckungs-Sektorisierung innerhalb der Funkzelle bereitgestellt wird.

12. Verfahren gemäß einem der vorhergehenden Ansprüche,
wobei das Verfahren ferner das Anweisen des Benutzergeräts in der Funkzelle umfasst, mit der Basisstation innerhalb eines festgelegten vertikalen Sektors zu kommunizieren, der in der Funkzelle bereitgestellt wird .

13. Verfahren gemäß einem der vorhergehenden Ansprüche,
wobei das Verfahren ferner das Bereitstellen von Informationen an ein adaptives Antennenarray umfasst, um die Anpassung der vertikalen Funkabdeckungs-Sektorisierung zu unterstützen, die in der Funkzelle bereitgestellt wird.

14. Computerprogramm-Produkt, das in der Lage ist, wenn es auf einem Computer ausgeführt wird, das Verfahren gemäß einem der Ansprüche 1 bis 13 durchzuführen.

15. Netzwerksteuerknoten (20), der in der Lage ist, eine vertikale Funkabdeckungs-Sektorisierung dynamisch anzupassen, die innerhalb einer Funkzelle bereitgestellt wird, die durch eine Basisstation in einem drahtlosen Telekommunikationsnetz unterstützt wird;
wobei der Netzwerksteuerknoten Folgendes aufweist:
- eine Bestimmungslogik (210), die dazu in der Lage ist, zu bestimmen, ob die Basisstation in der Lage ist, zwei oder mehrere vertikale Funkabdeckungssektoren innerhalb der Funkzelle zu unterstützen;
- eine Überwachungslogik (200), die dazu in der Lage ist, eine Betriebskennlinie zu überwachen, die die Auslastung in der Funkzelle anzeigt, die von der Basisstation unterstützt wird, um zu bestimmen, ob ein vorbestimmter Schwellwert überschritten worden ist, und
- eine Anpassungslogik (220), die dazu in der Lage ist, die vertikale Funkabdeckungs-Sektorisierung anzupassen, die in einer Funkzelle bereitgestellt wird, falls die Basisstation in der Lage ist, zwei oder mehrere vertikale Funkabdeckungssektoren innerhalb einer Funkzelle zu unterstützen, und der vorbestimmte Schwellwert überschritten worden ist.

## Revendications

1. Procédé d'adaptation dynamique de la sectorisation verticale d'une couverture radio fournie au sein d'une cellule radio supportée par une station de base dans un réseau de télécommunications sans fil, ledit procédé comprenant :
l'établissement de la capacité ou non de la station de base de supporter deux secteurs verticaux ou plus de couverture radio au sein de la cellule radio ;
la surveillance d'une caractéristique opérationnelle indiquant une charge dans ladite cellule radio supportée par ladite station de base afin d'établir si un seuil prédéterminé a été dépassé ; et
si ladite station de base est capable de supporter deux secteurs verticaux ou plus de couverture radio au sein de ladite cellule radio et ledit seuil prédéterminé a été dépassé, l'adaptation de ladite sectorisation verticale de ladite couverture radio fournie au sein de ladite cellule radio.

2. Procédé selon la revendication 1, selon lequel ladite adaptation comprend l'augmentation des secteurs verticaux de couverture radio fournie au sein de ladite cellule radio.

3. Procédé selon la revendication 1, selon lequel l'adaptation comprend la réduction des secteurs verticaux de couverture radio fournie au sein de ladite cellule radio.

4. Procédé selon l'une quelconque des revendications précédentes, selon lequel l'adaptation comprend l'adaptation d'un motif de secteurs verticaux de couverture radio fournie au sein de ladite cellule radio.

5. Procédé selon l'une quelconque des revendications précédentes, selon lequel ladite surveillance comprend la surveillance d'une caractéristique opérationnelle indiquant la présence d'une charge de liaison montante au sein de ladite cellule radio.

6. Procédé selon l'une quelconque des revendications précédentes, selon lequel ladite surveillance comprend la surveillance d'une caractéristique opérationnelle indiquant la présence d'une charge de liaison descendante au sein de ladite cellule radio.

7. Procédé selon l'une quelconque des revendications précédentes, selon lequel ladite caractéristique opérationnelle surveillée comprend une indication de saturation d'ordonnanceur au sein de ladite cellule radio.

8. Procédé selon l'une quelconque des revendications précédentes, selon lequel ladite surveillance de ladite caractéristique opérationnelle indiquant la présence d'une charge comprend la surveillance d'une indication de surcharge de cellule.

9. Procédé selon l'une quelconque des revendications précédentes, selon lequel ladite surveillance comprend en outre la surveillance de caractéristiques d'équipement utilisateur qui communique avec ladite station de base au sein de ladite cellule radio.

10. Procédé selon la revendication 9, selon lequel lesdites caractéristiques d'équipement utilisateur comprennent une indication de localisation dudit équipement utilisateur au sein de ladite cellule radio.

11. Procédé selon l'une quelconque des revendications précédentes, selon lequel ledit procédé comprend en outre l'information audit équipement utilisateur opérant au sein de ladite cellule radio de ladite adaptation de ladite sectorisation verticale de ladite couverture radio fournie au sein de ladite cellule radio.

12. Procédé selon l'une quelconque des revendications précédentes, comprenant en outre l'instruction audit équipement utilisateur au sein de ladite cellule radio de communiquer avec ladite station de base dans un secteur vertical spécifié fourni au sein de ladite cellule radio.

13. Procédé selon l'une quelconque des revendications précédentes, selon lequel ledit procédé comprend en outre la fourniture d'informations à un réseau d'antennes adaptatives afin de supporter ladite adaptation de ladite sectorisation verticale de ladite couverture radio fournie au sein de ladite cellule radio.

14. Produit de programme d'ordinateur opérable, lorsqu'exécuté par un ordinateur, pour effectuer le procédé selon l'une quelconque des revendications 1 à 13.

15. Noeud de contrôle réseau (20) opérable pour adapter de manière dynamique la sectorisation verticale d'une couverture radio fourni au sein d'une cellule radio supportée par une station de base dans un réseau de télécommunications sans fil, ledit noeud de contrôle réseau comprenant :
de la logique de calcul (210) opérable pour établir si une station de base est capable de supporter deux secteurs verticaux ou plus de couverture radio fournie au sein de ladite cellule radio ;
de la logique de surveillance (200) opérable pour surveiller une caractéristique opérationnelle indiquant la présence d'une charge au sein de ladite cellule radio supportée par la station de base afin d'établir si un seuil prédéterminé a été dépassé ; et
de la logique d'adaptation (220) opérable pour adapter ladite sectorisation verticale de ladite couverture radio fournie au sein de ladite cellule radio si ladite station de base est capable de supporter deux secteurs verticaux ou plus de couverture radio au sein de ladite cellule radio et si ledit seuil prédéterminé a été dépassé.
